# EUROPEAN PATENT APPLICATION

(11) **EP 1 749 881 A1**
(43) Date of publication of application: **07.02.2007**
(21) Application number: 05741529.1
(22) Date of filing: 18.05.2005
(51) Int. Cl.: C12G 3/02

(54) **PROCESS FOR PRODUCING EFFERVESCENT BREWAGE USING NONE OF BARLEY, WHEAT AND MALT AND EFFERVESCENT BREWAGE PRODUCED BY THE PROCESS**

(30) Priority: 21.05.2004 JP 2004151575
(71) Applicant: Sapporo Breweries Limited, Tokyo 150-8522 (JP)
(72) Inventor: KAWAMURA, Atsuki, SAPPORO BREWERIES LTD., Tokyo 150-8522 (JP); ODA, Mitsuhiko, SAPPORO BREWERIES LTD., Tokyo 150-8522 (JP); YOSHIDA, Ikuya, SAPPORO BREWERIES LTD., Eniwa-shi, Hokkaido 061-1405 (JP); NAKAMURA, Takeshi, SAPPORO BREWERIES LTD., Yaizu-shi, Shizuoka 425-00 (JP)
(74) Representative: Billington, Lawrence Emlyn
(86) International application number: PCT/JP2005/009058
(87) International publication number: WO 2005/113737

(57) **Abstract**

The processing method of a brewed alcoholic beverage with foaming properties which does not use barley, wheat and malt is disclosed that includes a step for processing a pro-fermentation liquid using at least a syrup containing sources of carbon, sources of nitrogen, hops and water as raw materials and a step for fermenting the pre-fermentation liquid using a brewers' yeast. A ratio which expresses the rice mash contained in the whole syrup in between 5 and 50 weight %.

## Description

### BACKGROUND OF THE INVENTION

### 1. Field of the Invention

This invention generally relates to a brewed alcoholic beverage with foaming properties which does not use barley, wheat and malt. Especially, this invention relates to the brewed alcoholic beverage with foaming properties which can improve flavor and the durability of flavor not using barley, wheat and malt but using a rice mash.

### 2. Description of the Related Art

Conventionally, there are alcoholic beverages such as beer and low-malt beer which use barley, wheat and malt as materials. Malt alcoholic beverages such as beer and low-malt beer use barley malt as main material. The ratio of malt in beer and low-malt beer is defined by the weight% of malt out of all materials except water under the Liquor Tax Act in Japan. Beer or low-malt beer uses adjuncts (starch like rice, corn and starch) besides malt. Starches of these adjuncts are made into mash due to an active enzyme of malt, then the mash is fermented and decomposed into alcohol and carbon dioxide gas; thereby beer and low-malt beer as alcoholic beverages can be obtained.

However, a flavor, the durability (time changing) of flavor or the foaming properties are different depending on variable ratios of malt even for beer and low-malt beer which use the same malt as one of their materials. Especially, the flavor and the durability of the flavor have great differences depending on a ratio of malt when the ratio of malt is much different in low-malt beer. For example, when the ratio of malt is low, a specific smell like sulfide small or a specific flavor like a small that is oxidized is provided for low-malt beer. Also, when the ratio of malt is low, there is a tendency for the durability of a flavor to be deteriorated. Thus, the change of flavor and the durability of flavor are due to amino acids including malt as nutrient for brewers' yeast performing the alcoholic fermentation during the production of malt alcoholic beverages. A physiological state of the yeast changes depending on the amount of amino acids, and it is thought that properties of the final product of malt alcoholic beverages have been changing under the influence.

However, for malt alcoholic beverages like low-malt beer, the above problem of the flavor or the durability of the flavor is improved by changing a part or all of adjuncts into rice decompositions, that is a rice mash is made into mash including amino acids and minerals obtained by enzymatic decomposition using glycolysis enzyme and proteolytic enzyme (for example, see patent document 1).

On the other hand, beer-taste alcoholic beverages with foaming properties without using barley, wheat and malt have been developed and are selling in the market place, but there is also a problem like the above problem of the flavor or the durability of flavor. For malt alcoholic beverages, the above problem is overcome by using a rice mash as adjuncts in addition to using malt. However, more improvement is needed for beer-taste alcoholic beverages with foaming properties without using barley, wheat and malt in order to solve the above problems.
Patent Document 1: JP-A 2004-008183
Patent Document 2: WO 2004/000990A1

### SUMMARY OF THE INVENTION

It is an object of the present invention to provide a brewed alcoholic beverage with foaming properties which does not use barley, wheat and malt, in which the flavor becomes more mild and the durability of the flavor is more increased; and the brewed alcoholic beverage obtained by using the above method.

In order to achieve the above-mentioned object, there is provided according to one aspect of the present invention a processing method of a brewed alcoholic beverage with foaming properties which does not use barley, wheat and malt comprising:
a process for processing a pre-fermentation liquid using at least a syrup containing sources of carbon, sources of nitrogen, hops and water as raw materials and
a process for fermenting the pre-fermentation liquid using a brewers' yeast,
wherein a ratio which expresses a rice mash contained in the syrup is between 5 and 50 weight %.

According to this, the processing method of the brewed alcoholic beverage with foaming properties which does not use barley, wheat and malt, in which the flavor becomes more mild and the durability of the flavor is more increased, can be provided by using the rice mash whose ratio in the total syrup is between 5 and 50 weight %, even though malt is not used in the processing method.

There is provided according to another aspect of the present invention a processing method of a brewed alcoholic beverage with foaming properties which does not use barley, wheat and malt comprising:
a process for processing a pre-fermentation liquid using at least a syrup containing sources of carbon, sources of nitrogen, hops, an improving substance for generating foam and for foam stability and water as raw materials and
a process for fermenting the pre-fermentation liquid using a brewers' yeast,
wherein a ratio which expresses a rice mash contained in the syrup is between 5 and 50 weight %.

According to this, the brewed alcoholic beverage with foaming properties which does not use barley, wheat and malt, in which the flavor becomes more mild and the durability of the flavor is more increased and also the foam stability is improved by adding the improving substance for generating foam and for foam stability, can be provided by using the rice mash whose ratio in the total syrup is between 5 and 50 weight %, even though malt is not used in the processing method.

There is also provided according to another aspect of the present invention a brewed alcoholic beverage with foaming properties processed by the processing method as described above.

According to this, the brewed alcoholic beverage with foaming properties which does not use barley, wheat and malt, in which the flavor becomes more mild and the durability of the flavor is more increased and also the foam stability is improved by adding the improving substance for generating foam and for foam stability, can be provided without using malt in the processing method.

There is also provided according to another aspect of the present invention a brewed alcoholic beverage with foaming properties processed by the processing method as described above, wherein a concentration of remaining extract (intrinsic extract concentration) is less than 2 weight %.

According to this, the brewed alcoholic beverage with foaming properties manufactured by the above processing methods, in which the concentration of remaining extract (intrinsic extract concentration) is less than 2 weight %, that is spirits, can be provided by using a new method without distilling from a starting alcoholic beverage.

According to the present invention, there is provided a brewed alcoholic beverage with foaming properties which does not use barley, wheat and malt, in which the flavor becomes more mild and the durability of the flavor is more increased; thereby the brewed alcoholic beverage having superior flavor can be obtained without using malt.

Other objects, features and advantages of the present invention will become more apparent from the following detailed description.

### BRIEF DESCRIPTION OF THE DRAWINGS

Other objects, features and advantages of the present invention will become more apparent from the following detailed description when read in conjunction with the accompanying drawings, in which:
Fig. 1 is a graph of comparative fermentation period for processing of other miscellaneous alcoholic beverages described in an example 1;
Fig. 2 is a graph of comparative fermentation period for processing of other miscellaneous alcoholic beverages described in an example 2;
Fig. 3 is a graph of comparative fermentation periods for processing of "sprits" which is described in example 3.

### DESCRIPTION OF THE PREFERRED EMBODIMENTS

A description will now be given, with reference to the embodiments according to the present invention. Below, the best mode of the present invention is described with preferred embodiments of the brewed alcoholic beverage with foaming properties which does not use barley, wheat and malt, that is one embodiment of beer-taste other miscellaneous alcoholic beverages (hereafter, it is described as other miscellaneous alcoholic beverages).

First of all, a general production method of other miscellaneous alcoholic beverages of the present invention is described.

First, hot water is added to materials of syrup containing sources of carbon, sources of nitrogen as amino acids content materials other than wheat or malt, hop, coloring matter, and an improving substance for generating foam and for foam stability and they are made into a solution including ingredients of sugar and amino acids. Then, after the solution is boiled, spent hops are removed from the solution and the solution is chilled so that the solution is made to be a pre-fermentation liquid. The pre-fermentation liquid which is produced as described above is fermented using brewers' yeast like an enzyme for beer, the as same as the usual production step of beer production, then the produced liquid is stored. By doing the above steps, another miscellaneous alcoholic beverage the same as beer can be obtained without using starch materials like barley, wheat and malt. Also, in general, a flavor adding beer taste, dietary fibers adding functionality and herbs adding characteristics to the flavor can be added after the fermentation, as necessary. The produced other miscellaneous alcoholic beverage has the same flavor as beer and also has foaming properties of carbon dioxide, so that the brewed alcoholic beverage with superior foaming properties is provided.

The above description is a general production method of other miscellaneous alcoholic beverages.

The characteristics of the present invention are such that the rice mash, in which total amino acid content is 6 times greater than the conventional rice mash, is used for the above production method of other miscellaneous alcoholic beverages.

Here, the rice mash which is used in the present invention will be described. As described above, "the rice mash" is a mash obtained such that a liquid solution of rice is digested enzymatically using glycolysis enzyme and proteolytic enzyme as described in the patent document 1. Also, the rice mash includes amino acids and minerals having suitable composition for brewers' yeast used for producing the malt alcoholic beverages compared to a conventional mash made from corn. In the invention of the patent document 1, the total amino acid content is 1963 mg/L (total value of each amino acid ingredient shown in table 1); moreover, these amino acid ingredients are fermentable by the brewers' yeast and these are effective as nutrients for enzymatic activity of the brewers' yeast (hereinafter, it is described as the conventional rice mash). In the below examples, the rice mash which has increased total amino acid content up to 12147 mg/L was used (hereinafter, it is described as the improved rice mash)(table 1). In addition, alcoholic beverages with foaming properties include amino acid ingredients (AapNH2, GluNH2, G-ABA) which have been recently recognized for their importance respectively (582 mg/L, 224 mg/L, 115 mg/L) and it is clear that these amino acid ingredients are extremely useful. Also, about sugar, especially, monosaccharose and disaccharose ingredients, which contribute to the formentation, are included in the same ratio as well as corn mash for either rice mash. In this point, the rice mash is highly suitable as a material for malt alcoholic beverages.

**TABLE 1**

| AMINO ACID ANALYSIS (mg/L) | | |
|---|---|---|
| No. | SAMPLE | IMPROVED R I CE MASH |
| 1 | Glu | 756 |
| 2 | Asp | 566 |
| 3 | Ser | 644 |
| 4 | Thr | 463 |
| 5 | Lys | 572 |
| 6 | Arg | 1951 |
| 7 | Val | 971 |
| 8 | Met | 393 |
| 9 | Leu | 1622 |
| 10 | Ile | 731 |
| 11 | His | 289 |
| 12 | Gly | 292 |
| 13 | Phe | 1076 |
| 14 | Tyr | 753 |
| 15 | Ala | 758 |
| 16 | Trp | 159 |
| 17 | Pro | 153 |
| | 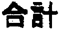 | 12149 |

In addition, as a result of examination by the present inventor, it is recognized that the adding amount ratio of rice decompositions is between 5 and 50 weight% of the total amount of syrup used, by which adding amount ratio at least a predetermined effect of the flavor and the durability of the flavor of the produced brewed alcoholic beverage with foaming properties becomes effective.

### EXAMPLES

Below, examples that were carried out according to the processing method of the present invention are described.

Here, brewing examinations for alcoholic beverages which were carried out using the rice mash will be described. Regarding these examinations, the following will be described.

In example 1, other miscellaneous alcoholic beverages processed with the improved rice mash and other miscellaneous alcoholic beverages processed with the conventional method are compared;

In example 2, other miscellaneous alcoholic beverages were processed by changing the amount of the improved rice mash, and a suitable range of the amount of the improved rice mash was determined;

In example 3, new types of sprits weres processed by applying the above described other miscellaneous alcoholic beverages.

For examples 1-3, examinations for an evaluation of fermentability and comparative taste evaluation of flavor were performed.

Facilities for performing: these examples were experimentally carried out in 400 liter-sixed brewing facilities.

### Example 1

Used materials : in order to process the other miscellaneous alcoholic beverages, materials were syrup 69 kg (75% of solid parts, the syrup used the rice mash or the product of DE50 and they are commercially available.). The ratio of the rice mash contained in materials was as shown in the following:
0 weight% (#1-1, none);
0 weight% (#1-2, adding 240 g of amino acid powder);
10 weight% (#1-3, 6.9 kg of the conventional rice mash); and
10 weight% (#1-4, 6.9 kg of the improved rice mash).

Specifically, 300-350 L of hot water was added to 240 g of caramel coloring matter, 400 g of hop pellets and 2000 g of pea protein; the syrup was dissolved further, and this mixture was boiled for 60-90 minutes. Then, spent hops, etc., were removed from the mixture by the settling tank called Whirlpool, the remaining mixture was cooled by the plate cooler to 10°C, and the pre-formentation liquid was obtained. The brewers' yeast was added in this pre-fermentation liquid, and it was made to ferment at 6-15 °C (its fermentation period will be indicated below.). Then, it was stored at -1°C.

Using a kieselguhr, the fermentation liquid was filtrated, the yeast removed, and 4 types of final other miscellaneous alcoholic beverages were obtained.

As described above, 4 types of other miscellaneous alcoholic beverages were processed and the taste evaluation was performed for these experiments in the present example.

**TABLE 2**

| | #1-1 | #1-2 | #1-3 | #1-4 |
|---|---|---|---|---|
| THE SMELL OF SULFIDE | 3 | 1 | 0 | 0 |
| THE SCENT OF ESTER | 0 | 2 | 3 | 3 |
| AFTERTASTE | 0 | 1 | 2 | 3 |

For every item, the valuation basis of Table 2 is as follows, and was set as 3-stage evaluations.

The small of sulfide: 0 (weak), 1 (average), 2 (slightly strong), 3 (more strong)

The scent of ester: 0 (weak), 1 (average), 2 (slightly strong), 3 (more strong)

Aftertaste: 0 (no refreshing drinkability), 1 (average), 2 (slightly refreshing drinkability), 3 (more refreshing drinkability)

The evaluation standard for the taste evaluation of Table 2 was based on #1-1 without using the rice mash. As described below, since #1-1 did not have any sources of nitrogen added during the processing, the fermentation was terminated during processing and there were more residual extracts than predetermined for #1-1 which did not use the rice mash or corn protein powder. As a result of performing the taste evaluation by 10 panelists, compared with #1-1 and #1-2, the smell of sulfide was more reduced and also the scent of ester was increased for #1-3 which used the conventional rice mash and #1-4 which used the improved rice mash. Especially, refreshing drinkability was increased in aftertaste for #1-4 which used the improved rice mash; thus the desirable characteristics for malt alcoholic beverages, such as beer and low-malt beer, were reinforced.

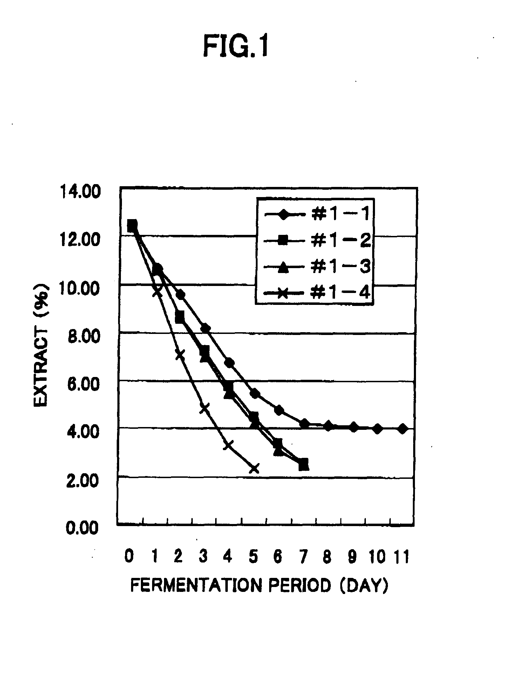

Figure 1 is a graph of comparative fermentation periods for processing of other miscellaneous alcoholic beverages described in the example 1. The fermentation period aimed at the period until the extract of pre-fermentation liquid becomes 2.5% from 12.50% with the apparent extract, but it decreased to 4.00% with the apparent extract for #1-1. The apparent extract is an extract led from the specific gravity of the alcohol produced from sugars in the pre-fermentation liquid by fermenting and sugars which have not fermented. More specifically, the apparent extract was extracted from the fermentation liquid in the fermentation process, and measured with a densitometer. Although the usual fermentation period is seven to nine days, without regard to whether there is fermentable sugar which the yeast can make into fermentation liquid in this embodiment, as for fermentation, the apparent extract stopped at 4%. As a result, #1-4 which used the improved rice mash shows a wide range of extracts compared to #1-1, #1-2 and #1-3. Thus, it is recognised that the improved rice mash is suitable as a nutrient for the brewers' yeast. Especially, because the fermentation of #1-1 which did not use the rice mash or the corn protein powder was terminated, it can be recognized that the improved rice mash acts as a nourishment source of supply making up for the nourishment source of the brewers' yeast and leads to an increase of the alcoholic fermentation of alcoholic beverages without using malt, like the present invention. As a result, the improved rice mash contributes to the processing method of alcoholic beverages that have preferable flavor. In addition, this is corresponding to the examination result of the example 1.

### Example 2

Used materials: in order to process the other miscellaneous alcoholic beverages, materials were set to syrup 69 kg (75% of solid parts, the syrup used the improved rice mash or the product of DE50 and they are commercially available.). The ratio of the improved rice mash contaqined in materials was as shown in the following:
5 weight% (#2-1, 3.5 kg of the improved rice mash);
10 weight% (#2-2, 6.9 kg of the improved rice mash);
20 weight% (#2-3, 13.8 kg of the improved rice mash) ;
30 weight% (#2-4, 20.7 kg of the improved rice mash) ;
50 weight% (#2-5, 34.5 kg of the improved rice mash); and
70 weight% (#2-6, 48.3 kg of the improved rice mash).

Then, the other miscellaneous alcoholic beverage was processed following the above described processing method in the preferred embodiment. Specifically, 300-350 L of hot water was added to 240 g of caramel coloring matter, 400 g of hop pellets and 2000 g of pea protein, the syrup was dissolved further, and this mixture was boiled for 60-90 minutes. Then, spent hops, etc., were removed from the mixture by the settling tank called Whirlpool, the remaining mixture was cooled by the plate cooler to 10 °C, and the pre-fermentation liquid was obtained. The brewers' yeast was added in this pre-fermentation liquid, and it was made to ferment at 6-15 °C (its formentation period will be indicated below.). Then, it was stored at -1 °C.

Using the kieselguhr, the fermentation liquid was filtrated, the yeast removed, and six final other miscellaneous alcoholic beverages were obtained.

As described above, 6 types of other miscellaneous alcoholic beverages were processed and the taste evaluation was performed for these experiments in the present example.

**TABLE 3**

| | | #2-1 | #2-2 | #2-3 | #2-4 | #2-5 | #2-6 |
|---|---|---|---|---|---|---|---|
| THE SMELL OF SULFIDE | | 0 | 0 | 0 | 0 | 0 | 0 |
| THE SCENT OF ESTER | | 3 | 3 | 3 | 3 | 3 | 3 |
| AFTERTASTE | | 3 | 3 | 3 | 3 | 2 | 1 |

For every item, the valuation basis of Table 2 is as follows, and was set as 3 stage evaluations.

The small of sulfide: 0 (weak), 1 (average), 2 (slightly strong), 3 (more strong)

The scent of ester: 0 (weak), 1 (average), 2 (slightly strong), 3 (more strong)

Aftertaste: 0 (no refreshing drinkability), 1 (average), 2 (slightly refreshing drinkability), 3 (more refreshing drinkability)

The evaluation standard for the taste evaluation of Table 3 was based on #2-2 which used 10 weight% of the improved rice mash compared to the conventional technique in the example 1. As a result of performing the taste evaluation by 10 panelists, refreshing drinkability was increased in aftertaste for #2-1, #2-3 and #2-4 as well as #2-2, thus the desirable characteristics for malt alcoholic beverages, such as beer and low-malt beer, were reinforced. Regarding #2-5 which used 50 weight% of the improved rice mash, even it has a little bit strange taste compared to #2-1 and #2-4 about the aftertaste according to some panelists' evaluation but its aftertaste was generally good. Also, regarding #2-6 which used 70 weight% of the improved rice mash, it has slightly mild flavor and has an increased richness in taste other than refreshing drinkability. However, the evaluation of #2-6 was low because the refreshing drinkability was inferior compared to the rest of this type of other miscellaneous alcoholic beverages like alcoholic beverage having good refreshing taste.

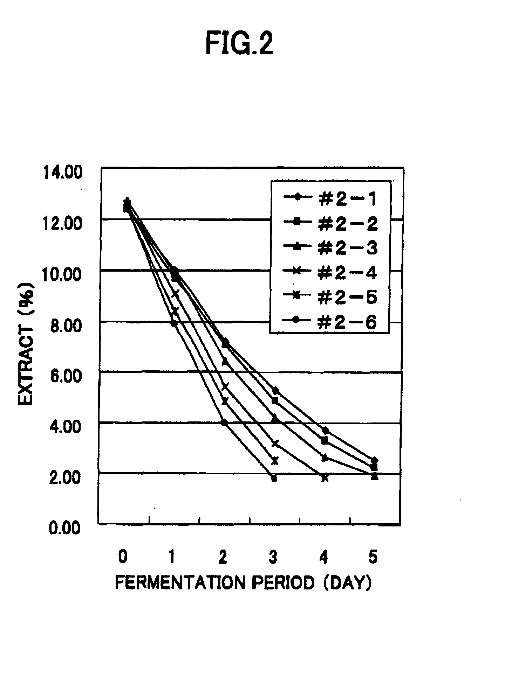

Figure 2 is a graph of comparative fermentation periods for processing of other miscellaneous alcoholic beverages described in the example 2. As shown from the result of figure 2, the fermentation period is suitable and the fermentability is improved by using 5 weight% or above of the improved rice mash in the syrup. From a result of the taste evaluation and a progress of extract, a suitable range for usage of the improved rice mash is between 5 and 50 weight%.

From the above-mentioned results, it is advantageous to add much more amino acids concerning other miscellaneous alcoholic beverages. In this point, the same effect can be obtained by using a large amount of the conventional rice mash, but there is an upper limit to the suitable amount of the rice mash to be used and, on the contrary, an excessive use beyond the upper limit of the conventional rice mash makes the flavor deteriorate, as seen from the result of the example 2. Therefore, the rice mash having large amount of amino acid content can decrease the amount to use, prevent the flavor from deteriorating, and shorten the fermentation period.

### Example 3

In the usual method, spirits are distilled from a material alcohol. However, a very peculiar processing method of spirits is developed by applying the processing method of other miscellaneous alcoholic beverages which are mentioned above.

Used materials: in order to process spirits, materials were syrup 69 kg (75% of solid parts, the syrup used the improved rice mash or the product of DE50 which has high maltose ratio and they are commercially available.). The ratio of the improved rice mash contained in all materials was 5 weight% (#3, 3.5 kg of the improved rice mash). Specifically, 300-350 L of hot water was added to 240 g of caramel coloring matter, 400 q of hop pellets and 2000 g of pea protein, the syrup was dissolved further, and this mixture was boiled for 60-90 minutes. Then, spent hops, etc., were removed from the mixture by the settling tank called Whirlpool, the remaining mixture was cooled by the plate cooler to 10 **°**C, and the pre-formentation liquid was obtained. The brewers' yeast was added in this pre-formentation liquid, and it was made to ferment at 6-15 °C (its fermentation period will be indicated below.). Then, it was stored at -1 °C.

Using the kieselguhr, the fermentation liquid was filtrated, the yeast removed, and final other miscellaneous alcoholic beverages were obtained.

For sprits, there is a pro-adjustable method of extract concentration of pre-fermentation mash liquid by using materials including highly fermented maltose, fructose, syrup having high glucose ratio or syrup having DE50 so that an intrinsic extract may become less than 2.00%, which is the definition of spirits of the Liquor Tax Law in Japan. Moreover, if miscellaneous alcoholic beverages are made into less than 2.00% of intrinsic extract at the time of filtration, it can be diverted to the spirits. The intrinsic extract is an extract that excludes the influence of the specific gravity by alcohol from the false extract mentioned above, and the intrinsic extract shows a more accurate extract than the false extract.

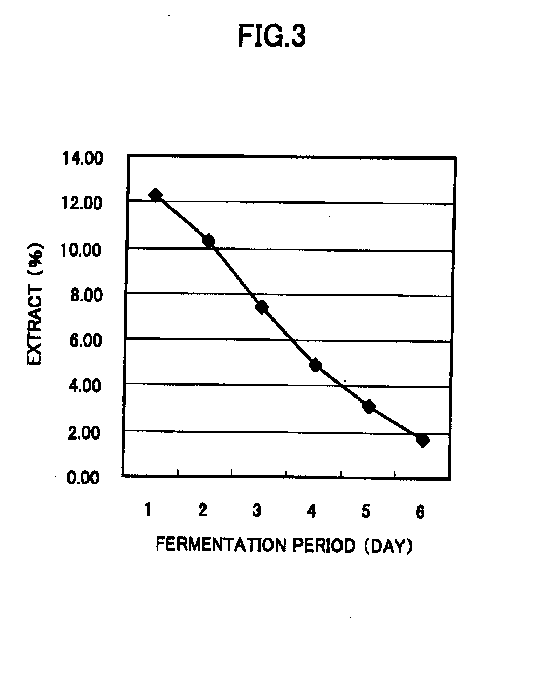

Figure 3 is a graph to show the fermentation period for processing of #3 of the example 3. As shown from this result, an appropriate fermentation was done by using 5 weight % of the improved rice mash in the syrup.

In the final product of #3, the alcoholic concentration was adjusted to 5.00 volume % and the intrinsic extract was 1.93 weight %. This intrinsic extract fulfills the requirement of the definition of the spirits under the Liquor Tax Act in Japan, in which the intrinsic extract is leas than 2.00 weight %. Generally, the product of #3 and its production method are totally different from a production method of the spirits that are distilled from the brewed alcoholic beverage, and it is recognised that the production method in the example 3 is an extremely unique method and has novelty. Moreover, after finishing the fermentation, a liqueur can be obtained when the intrinsic extract is 2.00 weight % or above by adding a flavor, sugar and so on.

As a result of performing the taste evaluation by 10 panelists, for the evaluation of flavor, the refreshing drinkability was increased in aftertaste, the taste of the example 3 is light tasted and it was easy to drink because the example 3 had increased alcohol fermentation and the intrinsic extract was low. As a result, it is recognized that an alcoholic beverage having preferable flavor can be obtained due to the taste evaluation of the above and this corresponds to the examination result of the above example 3.

In addition, the richness and the mildness of the flavor and the durability of the flavor can be provided when the present invention is applied to alcoholic beverages such as beer and low-malt beer which use barley, wheat and malt as materials.

The present invention is not limited to the specifically disclosed embodiment, and variations and modifications may be made without departing from the scope of the present invention.

The present application is based on Japanese priority application No.2004-151575 filed on May 21, 2005, the entire contents of which are hereby incorporated by references.

## Claims

1. A processing method of a brewed alcoholic beverage with foaming properties which does not use barley, wheat and malt comprising the steps of:
processing a pre-fermentation liquid using at least a syrup containing sources of carbon, sources of nitrogen, hope and water as raw materials; and
fermenting the pro-fermentation liquid using a brewers' yeast;
wherein a ratio which expresses a rice mash contained in the syrup is between 5 and 50 weight %.

2. A processing method of a brewed alcoholic beverage with foaming properties which does not use barley, wheat and malt comprising the steps of:
processing a pro-fermentation liquid using at least a syrup containing sources of carbon, sources of nitrogen, hope, an improving substance for generating foam and for the foam stability and water as raw materials; and
fermenting the pre-fermentation liquid using a brewers' yeast;
wherein a ratio which expresses a rice mash contained in the syrup is between 5 and 50 weight %.

3. A brewed alcoholic beverage with foaming properties processed by the processing method as claimed in claim 1 or claim 2.

4. A brewed alcoholic beverage with foaming properties processed by the processing method as claimed in claim 1 or claim 2, wherein a concentration of remaining extract (intrinsic extract concentration) is less than 2 weight %.
